# EUROPEAN PATENT APPLICATION

(11) **EP 4 571 984 A1**
(43) Date of publication of application: **18.06.2025**
(21) Application number: 22955305.2
(22) Date of filing: 17.08.2022
(51) Int. Cl.: H01M 50/30

(54) **GAS EXHAUST MEMBER, BOX, BATTERY, AND ELECTRICAL APPARATUS**

(71) Applicant: Contemporary Amperex Technology Co., Limited, Ningde, Fujian 352100 (CN)
(72) Inventor: ZHANG, Chenchen, Ningde, Fujian 352100 (CN); LI, Xing, Ningde, Fujian 352100 (CN); TANG, Yu, Ningde, Fujian 352100 (CN); FENG, Jingjie, Ningde, Fujian 352100 (CN); WANG, Pu, Ningde, Fujian 352100 (CN)
(74) Representative: Kraus & Lederer PartGmbB
(86) International application number: PCT/CN2022/113129
(87) International publication number: WO 2024/036524

(57) **Abstract**

The present disclosure provides an exhaust component, a box, a battery, and an electric device, relating to the technology field of battery. The exhaust component comprises a main body part and a one-way guiding part. The main body part is therein provided with an exhaust chamber, and the main body part is provided with a first surface, wherein the first surface is provided with ventilation holes communicating with the exhaust chamber. The one-way guiding part is arranged on the main body part. The one-way guiding part is configured to allow emissions released by the pressure relief mechanism of the battery cell to enter the exhaust chamber through the ventilation holes and is also configured to prevent the emissions within the exhaust chamber from being discharged through the ventilation holes. The one-way guiding part is able to allow the emissions to enter the exhaust chamber through the ventilation hole and to prevent the emissions from being discharged from the exhaust chamber, which eliminates the occurrence of backflow of emissions released into the exhaust chamber by the pressure relief mechanism. Thus, it can reduce the risk of backflow of emissions within the exhaust chamber, preventing the further spread of emissions inside the battery. This contributes to improving the usage safety of batteries comprising the exhaust component.

## Description

### Technical Field

The present disclosure relates to the technology field of batteries, specifically to an exhaust component, a box, a battery, and an electric device.

### Background Art

In recent years, new energy vehicles have experienced a leapfrog development. In the field of electric vehicles, power batteries serve as the energy source for electric vehicles and play an irreplaceable important role. With the strong promotion of new energy vehicles, the demand for power battery products is also increasing. The battery, as the core component of new energy vehicles, has high requirements in terms of both service life and safety. The battery is composed of multiple battery cells, and the thermal runaway of a battery cell is one of the crucial factors threatening the safety performance of the battery. However, in the battery of the existing technologies, the emissions released from the internal of the battery cell during its thermal runaway can still pose significant safety hazards, such as high-temperature smoke, which is not conducive to consumer safety during use.

### Summary

The embodiments of the present disclosure provide an exhaust component, a box, a battery, and an electric device, capable of effectively reducing the safety hazards of the battery during use.

In the first aspect, the embodiments of the present disclosure provide an exhaust component comprising a main body part and a one-way guiding part. The main body part is therein provided with an exhaust chamber, and the main body part is provided with a first surface, wherein the first surface is provided with ventilation holes communicating with the exhaust chamber. The one-way guiding part is arranged on the main body part. The one-way guiding part is configured to allow emissions released by the pressure relief mechanism of the battery cell to enter the exhaust chamber through the ventilation holes and is also configured to prevent the emissions within the exhaust chamber from being discharged through the ventilation holes.

In the above technical solution, by arranging the ventilation holes that communicate with the exhaust chamber on the first surface of the main body part, the battery provided with such an exhaust component allows emissions released by the pressure relief mechanism of the battery cell to enter the exhaust chamber through the ventilation holes in case of thermal runaway of the battery cell. This achieves the function of directing the emissions released by the battery cell in a controlled manner. Furthermore, the main body part is provided with a one-way guiding part, wherein the one-way guiding part can allow emissions to enter the exhaust chamber through the ventilation holes and prevent emissions from flowing out of the exhaust chamber to the external of the exhaust component. It ensures that the emissions released by the pressure relief mechanism will not flow out from other ventilation holes after entering the exhaust chamber through the ventilation holes, which eliminates the occurrence of backflow of emissions released into the exhaust chamber by the pressure relief mechanism. Thus, it can reduce the risk of backflow of emissions within the exhaust chamber, preventing the further spread of emissions inside the battery. This contributes to improving the usage safety of batteries comprising the exhaust component.

In some embodiments, along a first direction, one side of the main body part forms a first surface, and the ventilation holes are configured to be arranged oppositely to the pressure relief mechanism along the first direction. The first surface is provided with multiple ventilation holes, and the one-way guiding part seals the ventilation holes. The one-way guiding part corresponds one-to-one with the ventilation holes. The one-way guiding part is configured to be triggered by emissions released by the pressure relief mechanism arranged oppositely so as to open the ventilation holes.

In the above technical solution, by arranging multiple ventilation holes along the first direction on the first surface of the main body part corresponding to the pressure relief mechanism of the battery cell, and by sealing each ventilation hole through a one-way guiding part, emissions released by the pressure relief mechanism of the battery cell during thermal runaway can directly impact the ventilation holes and trigger the one-way guiding part to open the ventilation holes. This allows emissions released by the pressure relief mechanism of the battery cell to be discharged directly into the exhaust chamber through the ventilation holes. Simultaneously, the one-way guiding part is able to prevent emissions within the exhaust chamber from flowing out of the exhaust chamber through other ventilation holes to the external environment of the main body part. It ensures that the emissions released by the pressure relief mechanism will not flow out from other ventilation holes after entering the exhaust chamber through the ventilation holes, which eliminates the occurrence of backflow of emissions released into the exhaust chamber by the pressure relief mechanism. Thus, while ensuring that the size of the space of the exhaust chamber inside the exhaust component is sufficient, the risk of further spreading of emissions inside the battery can be effectively reduced. Additionally, it helps eliminate the phenomenon of emissions impacting other battery cells through other ventilation holes, thereby reducing the risk of large-area ignition and explosion of battery cells due to the thermal runaway of individual battery cells of the battery.

In some embodiments, the one-way guiding part covers the ventilation holes and the one-way guiding part is configured to detach from the main body part under the impact of emissions released by the pressure relief mechanism so as to open the ventilation holes.

In the above technical solution, the one-way guiding part is configured to seal the ventilation holes in a manner that covers the ventilation holes. Moreover, the main body part can be disengaged under the impact of the emissions released by the corresponding pressure relief mechanism, thus achieving the functionality of opening the ventilation holes triggered by the emissions released by the pressure relief mechanism. The structure is simple and easy to implement and manufacture.

In some embodiments, the one-way guiding part is a plate-like structure that covers the ventilation holes.

In the above technical solution, by providing the one-way guiding part, configured to cover the ventilation holes, as a plate-like structure, the structure of the one-way guiding part is advantageous in that it facilitates the one-way guiding part to cover the ventilation holes, thus providing a relatively good sealing effect on the ventilation holes. Additionally, it optimizes the space occupied by the one-way guiding part.

In some embodiments, the ventilation holes penetrate a cavity wall surface of the exhaust chamber, and the one-way guiding part is connected to the cavity wall surface of the exhaust chamber.

In the above technical solution, the ventilation holes penetrating the cavity wall surface of the exhaust chamber are covered by arranging the one-way guiding part on the cavity wall surface of the exhaust chamber. The structure of the exhaust component is advantageous in that, on the one hand, it facilitates the one-way guiding part to detach better from the cavity wall surface of the exhaust chamber under the impact of emissions released by the pressure relief mechanism, thus achieving the function of opening the ventilation holes. On the other hand, when the emissions impact the one-way guiding part covering other ventilation holes from inside the exhaust chamber, it tightly presses the one-way guiding part onto the cavity wall surface of the exhaust chamber. This enhances the sealing effect of the one-way guiding part on the ventilation holes, thus eliminating the occurrence of backflow of the emissions from other ventilation holes.

In some embodiments, the cavity wall surface of the exhaust chamber is provided with a receiving groove, wherein the receiving groove communicates with the ventilation holes and the exhaust chamber. At least a portion of the one-way guiding part is accommodated within the receiving groove.

In the above technical solution, the cavity wall surface of the exhaust chamber is provided with a groove configured for accommodating the one-way guiding part. Additionally, the ventilation holes and the exhaust chamber are communicated through the groove. In other words, the ventilation holes penetrate the groove bottom wall of the groove. The exhaust component, by using this structure, not only ensures the sealing of the ventilation holes by the one-way guiding part but also enhances the assembly stability of the one-way guiding part provided on the main body part. This reduces the risk of the one-way guiding part unintentionally detaching from the main body part during use due to vibrations or other environmental factors. Consequently, it effectively minimizes the occurrence of the one-way guiding part mistakenly opening the ventilation holes.

In some embodiments, the one-way guiding part is a one-way valve arranged within the ventilation holes.

In the above technical solution, by configuring the one-way guiding part as a one-way valve located within the ventilation hole, it achieves the functionality of the one-way guiding part opening the ventilation holes under the impact of the emissions released by the pressure relief mechanism so as to prevent the backflow of emissions within the exhaust chamber. The one-way guiding part of the structure possesses a better effect of anti-backflow.

In some embodiments, along the first direction, the main body part is provided with two first surfaces opposite each other, and both first surfaces are provided with ventilation holes.

In the above technical solution, the main body part is provided with a first surface on each side along the first direction, and both first surfaces are provided with ventilation holes. In other words, the main body part is provided with ventilation holes communicating with the exhaust chamber on both sides along the first direction so as to allow the assembly of battery cells on both sides of the exhaust component, thus enabling a single exhaust component to adapt to two rows of battery cells arranged oppositely to the pressure relief mechanism. Further, this is advantageous for saving production costs for batteries provided with this exhaust component and optimizing the arrangement of battery cells within the battery.

In some embodiments, the first surface is a surface having the largest area among the outer surfaces of the main body part.

In the above technical solution, where the first surface provided with ventilation holes is the surface having the largest area among the outer surfaces of the main body part, the exhaust component with this structure is advantageous in that, on the one hand, it facilitates the arrangement on the first surface of the ventilation holes provided oppositely to the pressure relief mechanism of the battery cell; on the other hand, the first surface can be provided for a side of the battery cell arranged with the pressure relief mechanism, and thus, this facilitates the discharge of emissions released by the pressure relief mechanism through the ventilation holes into the exhaust chamber of the main body part.

In some embodiments, further, the main body part is provided therein with a medium channel. The medium channel and the exhaust chamber are not in communication with each other, and the medium channel is configured to accommodate a refrigerant to manage the temperature of the battery cell.

In the above technical solution, by arranging the medium channel inside the main body part that is in communication with the exhaust chamber, the medium channel and the exhaust chamber are arranged independently and do not interfere with each other. Therefore, introducing a refrigerant into the medium channel can manage the temperature of the battery cell. This enables a structure where the exhaust component integrates the containment of emissions released by the pressure relief mechanism of the battery cell and the thermal management of the battery cell. This is advantageous for optimizing the internal space of the battery provided with the exhaust component.

In the second aspect, the embodiments of the present disclosure also provide a box, comprising a box body and the aforementioned exhaust component. The exhaust component is provided inside the box body. The exhaust component is configured to partition the interior of the box body into multiple containment cavities, wherein the containment cavities are configured for accommodating battery cells.

In the third aspect, the embodiments of the present disclosure further provide a battery, comprising a battery cell and the aforementioned box. The battery cell is housed in the containment cavity. The battery cell is provided with a pressure relief mechanism, wherein the pressure relief mechanism is configured to release the internal pressure of the battery cell.

In some embodiments, along the first direction, one side of the main body part forms the first surface, and the pressure relief mechanism is arranged on one side of the battery cell along the first direction. The pressure relief mechanism is arranged oppositely to the ventilation holes.

In the above technical solution, one side of the main body part forms the first surface along the first direction, meaning that the ventilation holes are arranged on one side of the main body part along the first direction. Correspondingly, the pressure relief mechanism is arranged on one side of the battery cell along the first direction, thus allowing the pressure relief mechanism to be arranged relative to the ventilation holes on the main body part. This facilitates emissions released by the pressure relief mechanism to be discharged directly into the exhaust chamber of the main body part through the ventilation holes during the thermal runaway of the battery cell, thus helping eliminate the occurrence of the spread of emissions released by the pressure relief mechanism within the box.

In some embodiments, the battery comprises multiple battery cells arranged along a second direction, and the main body part extends along the second direction. The ventilation holes correspond one-to-one with the pressure relief mechanisms, and the second direction is perpendicular to the first direction.

In the above technical solution, by arranging multiple battery cells within the battery along the second direction and arranging ventilation holes corresponding one-to-one with the pressure relief mechanisms of multiple battery cells on the main body part extending along the second direction, it can be achieved to have multiple battery cells arranged along the second direction sharing a single exhaust component. This not only reduces the difficulty of assembling between the exhaust component and the battery cells but also helps lower the manufacturing cost of the battery.

In some embodiments, the battery cell is rectangular in structure, and the battery cell is provided with a second surface. The second surface is a surface having the largest area among the outer surfaces of the battery cell, and the second surface is parallel to both the first direction and the second direction.

In the above technical solution, the battery cell is configured in a rectangular structure and the second surface having the largest surface area on the outer surface of the battery cell is parallel to both the first direction and second direction. In other words, the thickness direction of the battery cell is perpendicular to both the first direction and second direction so as to ensure that a direction in which the battery cell is arranged along the second direction is the length direction or width direction of the battery cell. The battery adopting the structure effectively increases the spacing between the pressure relief mechanisms of the battery cells in the second direction, thereby facilitating an increase in the distance of the ventilation holes in the second direction. On one hand, this effectively mitigates the case of the insufficient structural strength of the main body part due to the excessive density of ventilation holes in the first direction, thus reducing the risk of damage to the main body part under the high-temperature conditions of emissions released by the pressure relief mechanism. On the other hand, it minimizes the impact of emissions released by the pressure relief mechanism of the battery cell on the one-way guiding parts arranged on adjacent ventilation holes.

In some embodiments, the battery includes multiple rows of battery cells arranged along a third direction. Each row of battery cells includes multiple battery cells arranged along the second direction, and the third direction is perpendicular to the first direction and second direction.

In the above technical solution, the multiple battery cells within the battery are arranged in multiple rows along the third direction, and each row of battery cells includes multiple battery cells arranged along the second direction. Thus, it is possible to realize one exhaust component adapted to more battery cells, which is conducive to reducing the manufacturing cost of the battery and saving the internal space of the battery.

In the fourth aspect, the embodiments of the present disclosure further provide an electric device comprising the battery as described above, wherein the battery is configured to provide electrical energy.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of the structure of a battery provided in some embodiments of the present disclosure;
FIG. 3 is a schematic diagram of a structure of a battery cell provided in some embodiments of the present disclosure;
FIG. 4 is a schematic diagram of a structure of an exhaust component provided in some embodiments of the present disclosure;
FIG. 5 is a sectional view of the exhaust component provided in some embodiments of the present disclosure;
FIG. 6 is a schematic diagram of an assembly of the exhaust component with the battery cell provided in some embodiments of the present disclosure;
FIG. 7 is a partially enlarged view at A of the exhaust component shown in FIG. 5;
FIG. 8 is a sectional view of the exhaust component provided in some other embodiments of the present disclosure;
FIG. 9 is a partially enlarged view at B of the exhaust component shown in FIG. 8;
FIG. 10 is a sectional view of the exhaust component provided in some other embodiments of the present disclosure;
FIG. 11 is a partially enlarged view at C of the exhaust component shown in FIG. 10; and
FIG. 12 is a partially enlarged view at D of the exhaust component shown in FIG. 5.

Reference numerals: 1000- vehicle; 100- battery; 10- box; 11- box body; 111- first portion; 112- second portion; 12- exhaust component; 121-main body part; 1211- exhaust chamber; 1212- first surface; 1213- ventilation hole; 1214- receiving groove; 1215- medium channel; 122- one-way guiding part; 13- containment cavity; 20- battery cell; 21- pressure relief mechanism; 22- second surface; 200- controller; 300- motor; X- first direction; Y- second direction; Z- third direction.

### Detailed Description of Embodiments

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "provide", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A alone, the presence of both A and B, or the presence of B alone. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, prismatic battery cells, and pouch battery cells. The embodiments of the embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally comprises a box for encapsulating one or multiple battery cells or multiple battery modules. The box helps to prevent liquids or other foreign substances from affecting the charging or discharging of the battery cells.

The battery cell comprises a casing, an electrode assembly, and an electrolyte, and the casing is configured to accommodate the electrode assembly and the electrolyte. The electrode assembly is the component within the battery cell where electrochemical reactions occur. The electrode assembly is composed of a positive electrode sheet, a negative electrode sheet, and a separator. The battery cells work primarily on the movement of metal ions between the positive electrode sheet and the negative electrode sheet. The positive electrode sheet comprises a positive current collector and a positive active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative electrode tab. The material of the negative electrode current collector can be copper, and the negative active material can be carbon or silicon, and so on. To ensure that there is no fuse blow during high current flow, the number of positive electrode tabs is multiple and stacked together, and the number of negative electrode tabs is multiple and stacked together.

The material of the separator can be PP (polypropylene), PE (polyethylene), and so on. Furthermore, the electrode assembly can be a wound structure or a stacked structure. The embodiments of the present disclosure are not limited herein.

Batteries have prominent advantages such as high energy density, low environmental pollution, high power density, long service life, broad applicability, and low self-discharge coefficient. They are an important component of the current development of new energy sources. With the continuous development of battery technology, higher requirements have been put forward in terms of safety in the use of batteries.

The inventors have found that, for typical batteries, which are composed of multiple battery cells, pressure relief mechanisms are usually provided on the battery cells. This allows the pressure relief mechanisms to release the internal pressure of the battery cell when the battery cells undergo thermal runaway, thus reducing the risk of explosion of the battery cells caused by thermal runaway. However, emissions released by the pressure relief mechanism of individual battery cells during thermal runaway can spread within the battery, such as high-temperature smoke. Thus, it is very easy to trigger a large-area thermal runaway phenomenon of the battery.

Therefore, to address the issue of the spread of high-temperature smoke generated during the thermal runaway of individual battery cells within the battery, in existing technology, multiple baffles are provided inside the box of the battery. The baffles partition the interior of the box into multiple chambers for accommodating individual battery cells. The baffle is provided therein with an exhaust channel configured for ventilation. Additionally, an opening communicating with the exhaust channel is provided on one side of the baffle. This enables the high-temperature smoke released by the pressure relief mechanism of the battery cell to enter the exhaust channel within the baffle through the opening, thus eliminating the internal spread of high-temperature smoke within the battery. However, in batteries of this structure, it is highly likely that the high-temperature smoke released by the pressure relief mechanism of the battery cell, after entering the exhaust channel through the opening, can easily flow out from other openings of the baffle. As a result, on one hand, there is an occurrence of backflow of the high-temperature smoke released by the pressure relief mechanisms, leading to the continued spread of high-temperature smoke within the battery. On the other hand, this causes the high-temperature smoke within the exhaust channel to flow out through the opening, resulting in an impact on other battery cells. This leads to potential safety hazards such as thermal runaway or fire explosions in other battery cells, thereby adversely affecting the safety of the battery during use.

Based on the considerations mentioned above and to address the greater safety hazards of the battery during use, the inventors conducted in-depth research and provided an exhaust component. The exhaust component comprises a main body part and a one-way guiding part. The main body part is therein provided with an exhaust chamber, and the main body part is provided with a first surface, wherein the first surface is provided with ventilation holes communicating with the exhaust chamber. The one-way guiding part is arranged on the main body part. The one-way guiding part is configured to allow emissions released by the pressure relief mechanism of the battery cell to enter the exhaust chamber through the ventilation holes and is also configured to prevent the emissions within the exhaust chamber from being discharged through the ventilation holes.

In the exhaust component of this structure, by arranging the ventilation holes that communicate with the exhaust chamber on the first surface of the main body part, the battery provided with such an exhaust component allows emissions released by the pressure relief mechanism of the battery cell to enter the exhaust chamber through the ventilation holes in case of thermal runaway of the battery cell. This achieves the function of directing the emissions released by the battery cell in a controlled manner. Furthermore, the main body part is provided with a one-way guiding part, wherein the one-way guiding part can allow emissions to enter the exhaust chamber through the ventilation holes and prevent emissions from flowing out of the exhaust chamber to the external of the exhaust component. It ensures that the emissions released by the pressure relief mechanism will not flow out from other ventilation holes after entering the exhaust chamber through the ventilation holes, which eliminates the occurrence of backflow of emissions released into the exhaust chamber by the pressure relief mechanism. Thus, it can reduce the risk of backflow of emissions within the exhaust chamber, preventing the further spread of emissions inside the battery. This contributes to improving the usage safety of batteries comprising the exhaust component.

The exhaust component disclosed in the embodiments of the present disclosure can be used in various electric devices, including but not limited to vehicles, ships, or aircraft. The power system of the electric device can be formed using the box and battery disclosed in the present disclosure. In this way, this is beneficial for eliminating the occurrence of backflow of emissions discharged into the exhaust chamber of the exhaust component that spreads inside the cell so as to enhance the safety of the battery during use.

The embodiments of the present disclosure provide an electric device that uses batteries as a power source. The electric device can comprise but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electric device is a vehicle 1000 as an example.

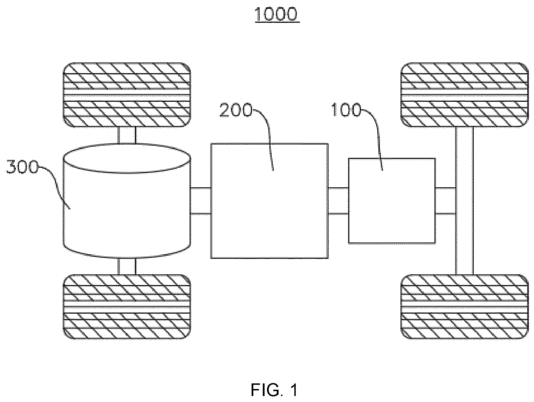

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

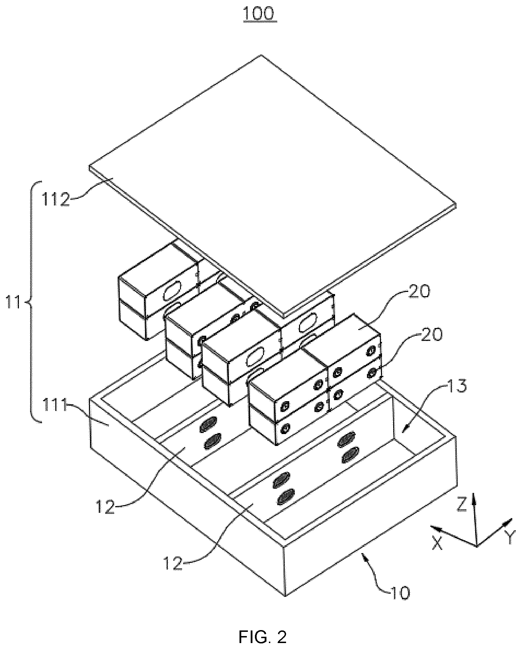

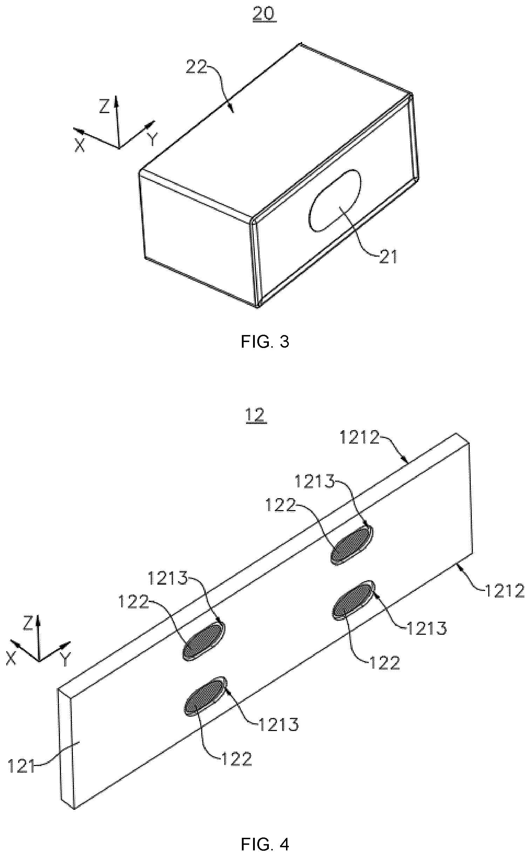

Referring to FIGS. 2 and 3, FIG. 2 is an exploded view of the structure of a battery 100 provided in some embodiments of the present disclosure, and FIG. 3 is a schematic diagram of a structure of a battery cell 20 provided in some embodiments of the present disclosure. The battery 100 comprises a box 10 and a battery cell 20, wherein the box 20 is housed the battery cell 10.

The box 10 includes a box body 11, wherein the box body 11 is configured to provide an assembly space for the battery cell 20, and the box body 11 can be of various structures. In FIG. 2, the box body 11 comprises a first portion 111 and a second portion 112. The second portion 112 is capped over the first portion 111. The first portion 111, and the second portion 112 together define an assembly space for accommodating the battery cell 20. The first portion 111 can be a hollow structure opening on one side, and the second portion 112 can be a plate-like structure. The second portion 112 is capped over an open side of the first portion 111 so that the first portion 111 and the second portion 112 together define an assembly space for accommodating the battery cell 20. In some embodiments, further, the first portion 111 and the second portion 112 can both be hollow structures opening on one side. The open side of the second portion 112 is capped over the open side of the first portion 111. Of course, the box 11 formed by the first portion 111 and the second portion 112 can be of a variety of shapes, e.g., cylindrical, rectangular, etc. Exemplarily, in FIG. 2, the box body 11 is of rectangular structure.

In the battery 100, the battery cell 20 can be one or multiple. If there are multiple battery cells 20 comprised in the battery 100, the multiple battery cells 20 can be connected in series, parallel, or hybrid. A hybrid connection refers to having both series and parallel connections among multiple battery cells 20. The multiple battery cells 20 can be directly connected in series, parallel, or a combination thereof, and then the unit composed of these multiple battery cells 20 can be placed inside the box 10. Of course, the battery 100 can also be in the form that, the multiple battery cells 20 can be first connected in series, parallel, or a mixed connection to form battery modules, and then the multiple battery modules can be connected in series, parallel, or a mixed connection to form an overall structure, which is accommodated within the box 10. The battery 100 can also comprise other structures. For example, the battery 100 can also comprise a busbar component, configured for achieving an electrical connection between the multiple battery cells 20.

Referring to FIG. 3, the battery cell 20 is provided with a pressure relief mechanism 21. The pressure relief mechanism 21 is located on one side of the battery cell 20. The pressure relief mechanism 21 is configured to release the internal pressure of the battery cell 20. In other words, the pressure relief mechanism 21 is configured to release emissions from the interior of the battery cell 20, such as high-temperature smoke, when the battery cell 20 experiences thermal runaway. The pressure relief mechanism 21 can be of various components such as explosion-proof valves, burst discs, gas valves, relief valves, or safety valves, among others.

Each battery cell 20 can be a secondary battery or a primary battery. It can also be a lithium-sulfur battery, sodium-ion battery, magnesium-ion battery, or other types, but is not limited to these. The battery cell 20 can have various shapes such as cylindrical, flat, rectangular, or other shapes. Exemplarily, in FIG. 3, the battery cell 20 is of a cylindrical structure.

In some embodiments, referring to FIGS. 2 and 3, the box 10 comprises at least one exhaust component 12. The exhaust component 12 is provided inside the box body 11. The at least one exhaust component 12 is configured to partition the interior of the box body 11 into multiple containment cavities 13 configured for accommodating battery cells 20. The exhaust component 12 is configured to accommodate the emissions, such as high-temperature smoke, released by the pressure relief mechanism 21 of the battery cell 20 during thermal runaway.

Exemplarily, in FIG. 2, one side of the battery cell 20 providing the pressure relief mechanism 21 abuts against the exhaust component 12 so as to facilitate the discharge of emissions released by the pressure relief mechanism 21 of the battery cell 20 into the exhaust component 12. Certainly, in other embodiments, the side of the battery cell 20 providing the pressure relief mechanism 21 can be arranged facing either the first portion 111 or the second portion 112.

Exemplarily, in FIG. 2, the exhaust component 12 is provided within the first portion 111 of the box body 11.

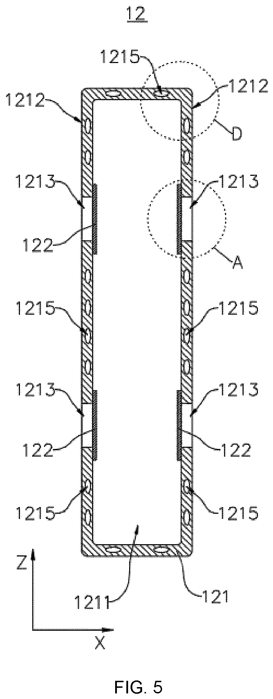

According to some embodiments of the present disclosure, with reference to FIGS. 2 and 3, and with further reference to FIGS. 4 and 5, FIG. 4 is a schematic diagram of a structure of the exhaust component 12 provided in some embodiments of the present disclosure, and FIG. 5 is a sectional view of the exhaust component 12 provided in some embodiments of the present disclosure. The present disclosure provides an exhaust component 12, wherein the exhaust component 12 comprises a main body part 121 and a one-way guiding part 122. The main body part 121 is therein provided with an exhaust chamber 1211, and the main body part 121 is provided with a first surface 1212, wherein the first surface 1212 is provided with ventilation holes 1213 communicating with the exhaust chamber 1211. The one-way guiding part 122 is arranged on the main body part 121. The one-way guiding part 122 is configured to allow emissions released by the pressure relief mechanism 21 of the battery cell 20 to enter the exhaust chamber 1211 through the ventilation holes 1213 and is also configured to prevent the emissions within the exhaust chamber 1211 from being discharged through the ventilation holes 1213.

The first surface 1212 is one of the outer surfaces of the main body part 121.

The exhaust chamber 1211 of the main body part 121 serves to house the emissions released by the pressure relief mechanism 21 of the battery cell 20. The exhaust chamber 1211 can be communicated with the external environment through the box 10 of the battery 100 to discharge emissions released by the pressure relief mechanism 21 to the outside of the battery 100. It can also not be in communication with the external environment so that the emissions released by the pressure relief mechanism 21 are housed in the exhaust chamber 1211.

The one-way guiding part 122 is configured to allow emissions released by the pressure relief mechanism 21 of the battery cell 20 to enter the exhaust chamber 1211 through the ventilation holes 1213 and is also configured to prevent the emissions within the exhaust chamber 1211 from being discharged through the ventilation holes 1213. That is, the one-way guiding part 122 serves to allow only a one-way flow of the emissions released by the pressure relief mechanism 21. In other words, only the emissions released by the pressure relief mechanism 21 are allowed to enter from the containment cavity 13 within the box 10 through the ventilation holes 1213 into the exhaust chamber 1211 of the main body part 121.

Exemplarily, the one-way guiding part 122 can be of various structures, such as an airway one-way valve, a one-way flow diaphragm, or a one-way flow tube.

By arranging the ventilation holes 1213 that communicate with the exhaust chamber 1211 on the first surface 1212 of the main body part 121, the battery 100 provided with such an exhaust component 12 allows emissions released by the pressure relief mechanism 21 of the battery cell 20 to enter the exhaust chamber 1211 through the ventilation holes 1213 in case of thermal runaway of the battery cell 20. This achieves the function of directing the emissions released by the battery cell 20 in a controlled manner. Furthermore, the main body part 121 is provided with a one-way guiding part 122, wherein the one-way guiding part 122 can allow emissions to enter the exhaust chamber 1211 through the ventilation holes 1213 and prevent emissions from flowing out of the exhaust chamber 1211 to the external of the exhaust component 12. It ensures that the emissions released by the pressure relief mechanism 21 will not flow out from other ventilation holes 1213 after entering the exhaust chamber 1211 through the ventilation holes 1213, which eliminates the occurrence of backflow of emissions released into the exhaust chamber 1211 by the pressure relief mechanism 21. Thus, it can reduce the risk of backflow of emissions within the exhaust chamber 1211, preventing the further spread of emissions inside the battery 100. This contributes to improving the usage safety of batteries 100 comprising the exhaust component 12.

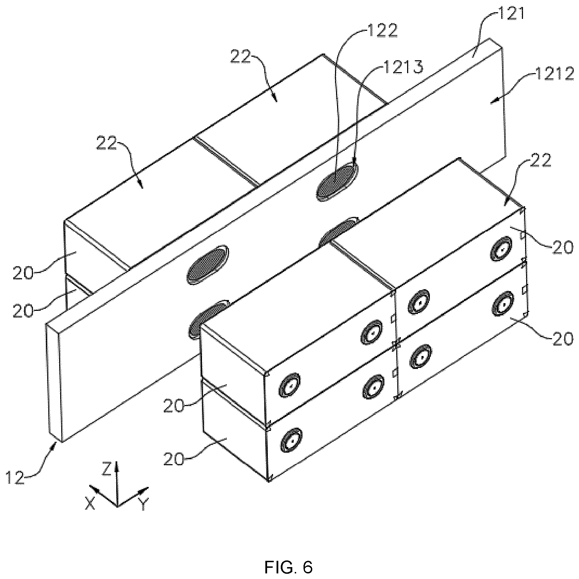

According to some embodiments of the present disclosure, with reference to FIGS. 4 and 5, and with further reference to FIG. 6, FIG. 6 is a schematic diagram of an assembly of the exhaust component 12 with the battery cell 20 provided in some embodiments of the present disclosure. Along a first direction X, one side of the main body part 121 forms a first surface 1212, and the ventilation holes 1213 are configured to be arranged oppositely to the pressure relief mechanism 21 along the first direction X. The first surface 1212 is provided with multiple ventilation holes 1213, and the one-way guiding part 122 seals the ventilation holes 1213. The one-way guiding part 122 corresponds one-to-one with the ventilation holes 1213. The one-way guiding part 122 is configured to be triggered by emissions released by the pressure relief mechanism 21 arranged oppositely so as to open the ventilation holes 1213.

The first surface 1212 is a surface of the side of the main body part 121 in the first direction X.

The ventilation holes 1213 are configured to be arranged oppositely to the pressure relief mechanism 21 along the first direction X. That is, each ventilation hole 1213 is arranged oppositely to the pressure relief mechanism 21 of one battery cell 20 along the first direction X. In other words, the pressure relief mechanism 21 of each battery cell 20 is aligned with one ventilation hole 1213 along the first direction X.

The one-way guiding part 122 functions to seal the ventilation hole 1213 and opens the ventilation hole 1213 under the action of the emissions released by the pressure relief mechanism 21. In other words, when thermal runaway occurs in battery cell 20, the emissions released by the pressure relief mechanism 21 of the battery cell 20 will impact the ventilation holes 1213, thereby triggering the one-way guiding part 122 to open the ventilation holes 1213. This allows the emissions to enter the exhaust chamber 1211 through the ventilation holes 1213.

The ways to seal the ventilation holes 1213 with the one-way guiding part 122 can be various. For example, the one-way guiding part 122 can seal the ventilation holes 1213 by covering the ventilation holes 1213. That is, the projection of the one-way guiding part 122 in the first direction X is greater than the ventilation holes 1213. Of course, the one-way guiding part 122 can also seal the ventilation holes 1213 in a manner of being provided within the ventilation holes 1213 to seal the ventilation holes 1213.

It should be noted that, in the embodiments of the present disclosure, the one-way guiding part 122 is triggered by the impact of the emissions released by the pressure relief mechanism 21. Of course, in other embodiments, the triggering function of the one-way guiding part 122 can also be achieved through a control mechanism. For example, a control mechanism is provided within the box 10 of the battery 100. The control mechanism is configured to detect the use of the pressure relief mechanism 21 of the battery cell 20. When the control mechanism detects the triggering and release of the internal pressure of the battery cell 20 by the pressure relief mechanism 21, the control mechanism can control the one-way guiding part 122 to open the ventilation holes 1213, thus realizing the triggering function of the one-way guiding part 122.

By arranging multiple ventilation holes 1213 along the first direction X on the first surface 1212 of the main body part 121 corresponding to the pressure relief mechanism 21 of the battery cell 20, and by sealing each ventilation hole 1213 through a one-way guiding part 122, emissions released by the pressure relief mechanism 21 of the battery cell 20 during thermal runaway can directly impact the ventilation holes 1213 and trigger the one-way guiding part 122 to open the ventilation holes 1213. This allows emissions released by the pressure relief mechanism 21 of the battery cell 20 to be discharged directly into the exhaust chamber 1211 through the ventilation holes 1213. Simultaneously, the one-way guiding part 122 is able to prevent emissions within the exhaust chamber 1211 from flowing out of the exhaust chamber 1211 through other ventilation holes 1213 to the external environment of the main body part 121. It ensures that the emissions released by the pressure relief mechanism 21 will not flow out from other ventilation holes 1213 after entering the exhaust chamber 1211 through the ventilation holes 1213, which eliminates the occurrence of backflow of emissions released into the exhaust chamber 1211 by the pressure relief mechanism 21. Thus, while ensuring that the size of the space of the exhaust chamber 1211 inside the exhaust component 12 is sufficient, the risk of further spreading of emissions inside the battery 100 can be effectively reduced. Additionally, it helps eliminate the phenomenon of emissions impacting other battery cells 20 through other ventilation holes 1213, thereby reducing the risk of large-area ignition and explosion of battery cells 20 due to the thermal runaway of individual battery cells 20 of the battery 100.

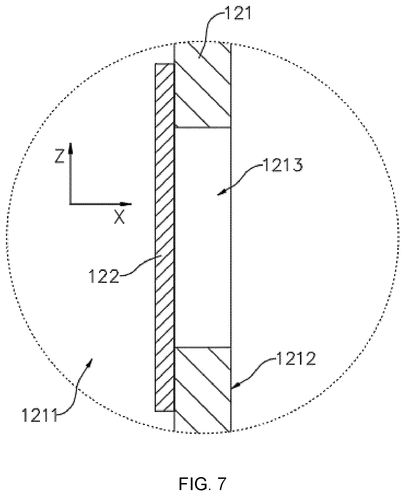

According to some embodiments of the present disclosure, with reference to FIG. 5, and with further reference to FIG. 7, FIG. 7 is a partially enlarged view at A of the exhaust component 12 shown in FIG. 5. The one-way guiding part 122 covers the ventilation holes 1213 and the one-way guiding part 122 is configured to detach from the main body part 121 under the impact of emissions released by the pressure relief mechanism 21 so as to open the ventilation holes 1213.

The one-way guiding part 122 covers the ventilation holes 1213, that is to say, along the first direction X, the one-way guiding part 122 completely covers the ventilation holes 1213 to seal the ventilation hole 1213.

The one-way guiding part 122 is configured to detach from the main body part 121 under the impact of emissions released by the pressure relief mechanism 21. In other words, when the battery cell 20 undergoes thermal runaway, the emissions released by the pressure relief mechanism 21 impact the one-way guiding part 122 so as to cause the one-way guiding part 122 to detach from the main body part 121 and no longer cover the ventilation hole 1213, thereby opening the ventilation hole 1213.

Optionally, the one-way guiding part 122 can be connected to the cavity wall surface of the exhaust chamber 1211 to cover the ventilation hole 1213, or it can be connected to the hole wall surface of the ventilation hole 1213 to achieve the cover of the ventilation hole 1213.

The one-way guiding part 122 can be connected to the main body part 121 using methods such as adhesion or clamping, thereby allowing the one-way flow part 122 to better detach from the main body part 121 under the impact of the emissions released by the pressure relief mechanism 21.

Exemplarily, in the embodiment, the material of the one-way guiding part 122 can be heat-resistant, such as steel, mica, or ceramic, thus ensuring that the one-way guiding part 122 does not melt under the high-temperature impact of the emissions released by the pressure relief mechanism 21. Therefore, the normal operation of the one-way flow part 122 is ensured.

The one-way guiding part 122 is configured to seal the ventilation holes 1213 in a manner that covers the ventilation holes 1213. Moreover, the main body part 121 can be disengaged under the impact of the emissions released by the corresponding pressure relief mechanism 21, thus achieving the functionality of opening the ventilation holes 1213 triggered by the emissions released by the pressure relief mechanism 21. The structure is simple and easy to implement and manufacture.

In some embodiments, the one-way guiding part 122 is a plate-like structure that covers the ventilation holes 1213. By providing the one-way guiding part 122, configured to cover the ventilation holes 1213, as a plate-like structure, the structure of the one-way guiding part 122 is advantageous in that it facilitates the one-way guiding part 122 to cover the ventilation holes 1213, thus providing a relatively good sealing effect on the ventilation holes 1213. Additionally, it optimizes the space occupied by the one-way guiding part 122.

According to some embodiments of the present disclosure, with reference to FIG. 5 and FIG. 7, the ventilation holes 1213 penetrate a cavity wall surface of the exhaust chamber 1211, and the one-way guiding part 122 is connected to the cavity wall surface of the exhaust chamber 1211.

The one-way guiding part 122 is connected to the cavity wall surface of the exhaust chamber 1211. That is to say, the one-way flow part 122 is arranged inside the exhaust chamber 1211 and is connected to the cavity wall surface of the exhaust chamber 1211. This allows the one-way guiding part 122 to cover the ventilation holes 1213 from the interior of the exhaust chamber 1211, thereby achieving the sealing of the ventilation holes 1213.

Exemplarily, the one-way guiding part 122 is adhered to the cavity wall surface of the exhaust chamber 1211, thereby enabling the effective detachment of the one-way guiding part 122 from the main body part 121 when the emissions released by the pressure relief mechanism 21 impacts the one-way guiding part 122 from the outside of the main body part 121. Conversely, when the emissions inside the exhaust chamber 1211 impact the one-way guiding part 122, it increases the pressure of the one-way guiding part 122 against the cavity wall surface of the exhaust chamber 1211, thereby effectively preventing the backflow of the emissions. Of course, in other embodiments, the one-way guiding part 122 can also be connected to the cavity wall surface of the exhaust chamber 1211 by a snap connection.

The ventilation holes 1213 penetrating the cavity wall surface of the exhaust chamber 1211 are covered by arranging the one-way guiding part 122 on the cavity wall surface of the exhaust chamber 1211. The structure of the exhaust component 12 is advantageous in that, on the one hand, it facilitates the one-way guiding part 122 to detach better from the cavity wall surface of the exhaust chamber 1211 under the impact of emissions released by the pressure relief mechanism 21, thus achieving the function of opening the ventilation holes 1213. On the other hand, when the emissions impact the one-way guiding part 122 covering other ventilation holes 1213 from inside the exhaust chamber 1211, it tightly presses the one-way guiding part 122 onto the cavity wall surface of the exhaust chamber 1211. This enhances the sealing effect of the one-way guiding part 122 on the ventilation holes 1213, thus eliminating the occurrence of backflow of the emissions from other ventilation holes 1213.

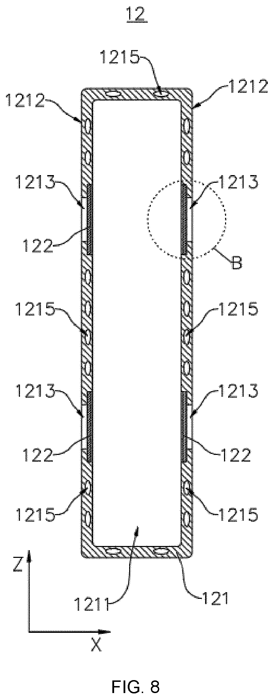

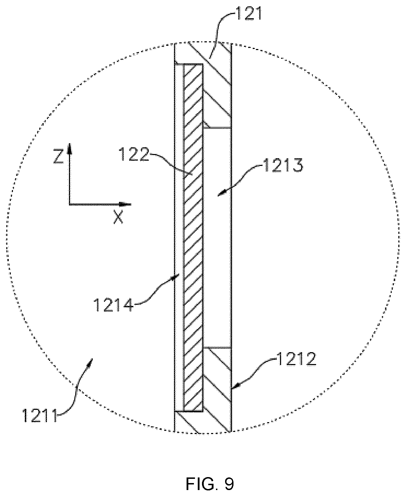

According to some embodiments of the present disclosure, with reference to FIG. 8 and FIG. 9, FIG. 8 is a sectional view of the exhaust component 12 provided in some other embodiments of the present disclosure, and FIG. 9 is a partially enlarged view at B of the exhaust component 12 shown in FIG. 8. The cavity wall surface of the exhaust chamber 1211 is provided with a receiving groove 1214, wherein the receiving groove 1214 communicates with the ventilation holes 1213 and the exhaust chamber 1211. At least a portion of the one-way guiding part 122 is accommodated within the receiving groove 1214.

The cavity wall surface of the exhaust chamber 1211 is provided with a receiving groove 1214, wherein the receiving groove 1214 communicates with the ventilation holes 1213 and the exhaust chamber 1211. In other words, the ventilation hole 1213 penetrates the groove bottom wall of the groove so that the ventilation hole 1213 is in communication with the exhaust chamber 1211 through the groove. Exemplarily, In the embodiment, the one-way guiding part 122 can be connected to the groove bottom wall of the groove or the groove side wall of the groove. The connection method can be achieved through adhesion or snap, thereby achieving covering for the ventilation hole 1213.

At least a portion of the one-way guiding part 122 is accommodated in the receiving groove 1214. In other words, the one-way guiding part 122 can be either entirely accommodated within the receiving groove 1214 or partially accommodated within the receiving groove 1214, which means that the one-way guiding part 122 has a portion along the first direction X that extends from the groove into the exhaust chamber 1211.

The cavity wall surface of the exhaust chamber 1211 is provided with a groove configured for accommodating the one-way guiding part 122. The ventilation hole 1213 is in communication with the exhaust chamber 1211 through the groove. The exhaust component 12, by using this structure, not only ensures the sealing of the ventilation holes 1213 by the one-way guiding part 122 but also enhances the assembly stability of the one-way guiding part 122 provided on the main body part 121. This reduces the risk of the one-way guiding part 122 unintentionally detaching from the main body part 121 during use due to vibrations or other environmental factors. Consequently, it effectively minimizes the occurrence of the one-way guiding part 122 mistakenly opening the ventilation holes 1213.

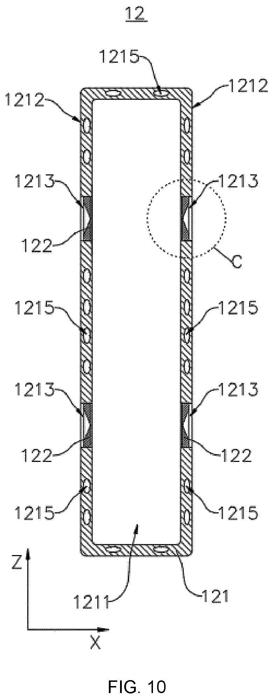

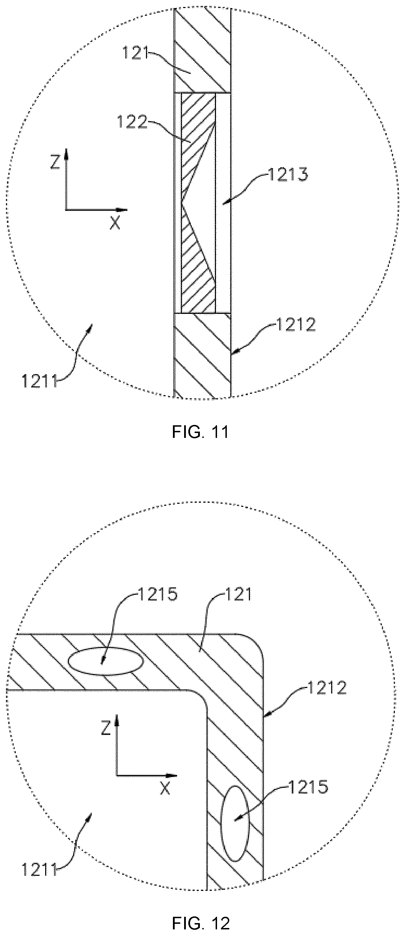

According to some embodiments of the present disclosure, with reference to FIG. 10 and FIG. 11, FIG. 10 is a sectional view of the exhaust component 12 provided in some embodiments of the present disclosure; and FIG. 11 is a partially enlarged view at C of the exhaust component 12 shown in FIG. 10. The one-way guiding part 122 is a one-way valve arranged within the ventilation holes 1213. In other words, the one-way guiding part 122 can also seal the ventilation holes 1213 in a manner of being provided within the ventilation holes 1213. The specific structure of the one-way valve can be found in the related technology and will not be repeated here.

Exemplarily, the one-way guiding part 122 can be an air path one-way valve, and its structure can be of various types, such as a spring-type one-way valve, gravity-type one-way valve, or diaphragm-type one-way valve, among others.

By configuring the one-way guiding part 122 as a one-way valve located within the ventilation hole 1213, it achieves the functionality of the one-way guiding part 122 opening the ventilation holes 1213 under the impact of the emissions released by the pressure relief mechanism 21 so as to prevent the backflow of emissions within the exhaust chamber 1211. The one-way guiding part 122 with this structure possesses a better effect of anti-backflow.

According to some embodiments of the present disclosure, with reference to FIG. 4, FIG. 5, and FIG. 6, along the first direction X, the main body part 121 is provided with two first surfaces 1212 opposite each other, and both first surfaces 1212 are provided with ventilation holes 1213.

The main body part 121 is provided with two first surfaces 1212 opposite each other, and both first surfaces 1212 are provided with ventilation holes 1213. In other words, the main body part 121 is provided with ventilation holes 1213 communicating with the exhaust chamber 1211 on both sides along the first direction X.

The main body part 121 is provided with a first surface 1212 on each side along the first direction X, and both first surfaces 1212 are provided with ventilation holes 1213. In other words, the main body part 121 is provided with ventilation holes 1213 communicating with the exhaust chamber 1211 on both sides along the first direction X so as to allow the assembly of battery cell 20 on both sides of the exhaust component 12, thus enabling a single exhaust component 12 to adapt to two rows of battery cells 20 arranged oppositely to the pressure relief mechanism 21. Further, this is advantageous for saving production costs for batteries 100 provided with the exhaust component 12 and optimizing the arrangement of battery cells 20 within the battery 100.

According to some embodiments of the present disclosure, with reference to FIG. 4, the first surface 1212 is a surface having the largest area among the outer surfaces of the main body part 121.

Exemplarily, the main body part 121 is a rectangular structure, and the first direction X is a thickness direction of the main body part 121. Therefore, the first surface 1212 is a surface having the largest area among the outer surfaces of the main body part 121.

The first surface 1212 provided with ventilation holes 1213 is the surface having the largest area among the outer surfaces of the main body part 121. The exhaust component 12 with this structure is advantageous in that, on the one hand, it facilitates the arrangement on the first surface 1212 of the ventilation holes 1213 provided oppositely to the pressure relief mechanism 21 of the battery cell 20; on the other hand, the first surface 1212 can be provided for a side of the battery cell 20 arranged with the pressure relief mechanism 21, and thus, this facilitates the discharge of emissions released by the pressure relief mechanism 21 through the ventilation holes 1213 into the exhaust chamber 1211 of the main body part 121.

According to some embodiments of the present disclosure, with reference to FIG. 5, and with further reference to FIG. 12, FIG. 12 is a partially enlarged view at D of the exhaust component 12 shown in FIG. 5. Further, the main body part 121 is provided therein with a medium channel 1215. The medium channel 1215 and the exhaust chamber 1211 are not in communication with each other, and the medium channel 1215 is configured to accommodate a refrigerant to manage the temperature of the battery cell 20.

The medium channel 1215 and the exhaust chamber 1211 are not in communication with each other, that is to say, the medium channel 1215 and the exhaust chamber 1211 are provided independently of each other and do not interfere with each other.

Optionally, one or multiple medium channels 1215 can be provided on the main body part 121. Exemplarily, in FIG. 12, the main body part 121 is provided with multiple medium channels 1215 extending in an extension direction of the main body part 121.

The medium channel 1215 is configured to accommodate the refrigerant, thus enabling the function of cooling down the battery cell 20 by injecting the refrigerant into the medium channel 1215 so as to realize the management of the temperature of the battery cell 20.

Exemplarily, the refrigerant can be a gas, such as air or hydrogen, or it can be a liquid, such as water, saline solution, or liquid nitrogen, and so on.

By arranging a medium channel 1215 that is not in communicate with the exhaust chamber 1211 in the main body part 121, introducing a refrigerant into the medium channel 1215 can manage the temperature of the battery cell 20. This enables a structure where the exhaust component 12 integrates the containment of emissions released by the pressure relief mechanism 21 of the battery cell 20 and the thermal management for the battery cell 20. This is advantageous for optimizing the internal space of the battery 100 provided with the exhaust component 12.

According to some embodiments of the present disclosure, with reference to FIG. 2, the embodiments of the present disclosure also provide a box 10, wherein the box 10 comprises a box body 11 and the exhaust component 12 according to any one of the embodiments above. The exhaust component 12 is provided inside the box body 11. The exhaust component 12 is configured to partition the interior of the box body 11 into multiple containment cavities 13, wherein the containment cavities 13 are configured for accommodating battery cells 20.

The exhaust component 12 is provided within the first portion 111 of the box body 11 so as to partition the interior of the box body 11 into multiple containment cavities 13.

Optionally, the number of exhaust components 12 provided within the box body 11 can be one or more. When one exhaust component 12 is provided, the exhaust component 12 partitions the interior of the box body 11 into two containment cavities 13 so that the exhaust component 12 and the first portion 111 form a structure of the Chinese character " 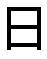 ". When multiple exhaust components 12 are provided, the multiple exhaust components 12 can be arranged at intervals along the length direction or width direction of the box body 11 so that the exhaust component 12 and the first portion 111 form a structure of Chinese character " 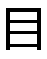 ", and the like. Of course, multiple exhaust components 12 can also be arranged crossing each other within the first portion 111 so that the exhaust component 12 and the first portion 111 form a structure of the Chinese character " 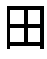 ", and the like. Exemplarily, in FIG. 2, two exhaust components 12 are provided, wherein the two exhaust components 12 are arranged at intervals along the first direction X so as to partition the interior of the box body 11 into three containment cavities 13.

According to some embodiments of the present disclosure, with reference to FIG. 2, the embodiments of the present disclosure further provide a battery 100, wherein the battery 100 comprises a battery cell 20 and the box 10 according to any one of the embodiments above. The battery cell 20 is housed in the containment cavity 13. The battery cell 20 is provided with a pressure relief mechanism 21, wherein the pressure relief mechanism 21 is configured to release the internal pressure of the battery cell 20.

The form in which the battery cell 20 is assembled into the containment cavity 13 can be various. For example, it can be with the side of the battery cell 20 arranged with the pressure relief mechanism 21 to face the first surface 1212 of the exhaust component 12. It can also be with the side of the battery cell 20 arranged with the pressure relief mechanism 21 to face either the first portion 111 or the second portion 112.

According to some embodiments of the present disclosure, with reference to FIG. 2, FIG. 5, and FIG. 6, along the first direction X, one side of the main body part 121 forms the first surface 1212, and the pressure relief mechanism 21 is arranged on one side of the battery cell 20 along the first direction X. The pressure relief mechanism 21 is arranged oppositely to the ventilation holes 1213.

The pressure relief mechanism 21 is arranged opposite to the ventilation hole 1213, meaning that along the first direction X, the pressure relief mechanism 21 is arranged in alignment with the ventilation hole 1213.

Optionally, the side of the battery cell 20 arranged with the pressure relief mechanism 21 can abut against the first surface 1212 of the main body part 121, or, a gap can be provided in the first surface 1212 of the main body part 121 in the first direction X. Exemplarily, in the embodiments of the present disclosure, the side of the battery cell 20 arranged with the pressure relief mechanism 21 can abut against the first surface 1212 of the main body part 121. This helps improve the assembly stability between the battery cell 20 and the exhaust component 12 and facilitates the discharge of the emissions released by the pressure relief mechanism 21 through the ventilation holes 1213 into the exhaust chamber 1211 of the main body part 121.

One side of the main body part 121 forms the first surface 1212 along the first direction X, meaning that the ventilation holes 1213 are arranged on one side of the main body part 121 along the first direction X. Correspondingly, the pressure relief mechanism 21 is arranged on one side of the battery cell 20 along the first direction X, thus allowing the pressure relief mechanism 21 to be arranged relative to the ventilation holes 1213 on the main body part 121. This facilitates emissions released by the pressure relief mechanism 21 to be discharged directly into the exhaust chamber 1211 of the main body part 121 through the ventilation holes 1213 during the thermal runaway of the battery cell 20, thus helping eliminate the occurrence of the spread of emissions released by the pressure relief mechanism 21 within the box 10.

According to some embodiments of the present disclosure, with reference to FIG. 2 and FIG. 6, the battery 100 comprises multiple battery cells 20 arranged along a second direction Y, and the main body part 121 extends along the second direction Y. The ventilation holes 1213 correspond one-to-one with the pressure relief mechanisms 21, and the second direction Y is perpendicular to the first direction X.

Exemplarily, the main body part 121 is a rectangular structure extending along the second direction Y, and the ventilation holes 1213 are provided on a side of the main body part 121 in the thickness direction of the main body part 121.

In some embodiments, the main body part 121 is provided with a first surface 1212 on each side along the first direction X, and each first surface 1212 is provided with the ventilation hole 1213. Correspondingly, both sides of the body part 121, along the first direction X, are provided with battery cell 20. The pressure relief mechanisms 21 of the battery cells 20 arranged on both sides of the main body part 121 along the first direction X are provided facing each other.

By arranging multiple battery cells 20 within the battery 100 along the second direction Y and arranging ventilation holes 1213 corresponding one-to-one with the pressure relief mechanisms 21 of multiple battery cells 20 on the main body part 121 extending along the second direction Y, it can be achieved to have multiple battery cells 20 arranged along the second direction Y sharing a single exhaust component 12. This not only reduces the difficulty of assembling between the exhaust component 12 and the battery cells 20 but also helps lower the manufacturing cost of the battery 100.

According to some embodiments of the present disclosure, with reference to FIGS 2, 3, and 6, the battery cell 20 is rectangular in structure, and the battery cell 20 is provided with a second surface 22. The second surface 22 is a surface having the largest area among the outer surfaces of the battery cell 20, and the second surface 22 is parallel to both the first direction X, and the second direction Y.

The second surface 22 is a surface having the largest area among the outer surfaces of the battery cell 20, meaning that the second surface 22 is the surface of the battery cell 20 in the thickness direction of the battery cell 20.

The second surface 22 is parallel to the first direction X and the second direction Y, meaning that the plane defined by the first direction X and the second direction Y is parallel to the second surface 22. In other words, the thickness direction of the battery cell 20 is perpendicular to both the first direction X and second direction Y. Exemplarily, in FIG. 6, the second direction Y is the length direction of the battery cell 20, and the pressure relief mechanism 21 is provided on one side of the battery cell 20 in the width direction (first direction X) of the battery cell 20.

It is noted that in other embodiments, the second direction Y can also be the thickness direction of the battery monomer 20, meaning that the second surface 22 is perpendicular to the second direction Y. In other words, the multiple battery cells 20 are arranged along the thickness direction of the battery cell 20.

The battery cell 20 is configured in a rectangular structure and the second surface 22 having the largest surface area on the outer surface of the battery cell 20 is parallel to both the first direction X and second direction Y. In other words, the thickness direction of the battery cell 20 is perpendicular to both the first direction X and the second direction Y so as to ensure that a direction in which the battery cell 20 is arranged along the second direction Y is the length direction or width direction of the battery cell 20. The battery 100 adopting the structure effectively increases the spacing between the pressure relief mechanisms 21 of the battery cells 20 in the second direction Y, thereby facilitating an increase in the distance of the ventilation holes 1213 in the second direction Y. On one hand, this effectively mitigates the case of the insufficient structural strength of the main body part 121 due to the excessive density of ventilation holes 1213 in the first direction X, thus reducing the risk of damage to the main body part 121 under the high-temperature conditions of emissions released by the pressure relief mechanism 21. On the other hand, it minimizes the impact of emissions released by the pressure relief mechanism of the battery cell 20 on the one-way guiding parts 122 arranged on adjacent ventilation holes 1213.

In some embodiments of the present disclosure, with reference to FIG. 2, FIG. 3 and FIG. 6, the battery 100 includes multiple rows of battery cells 20 arranged along a third direction Z. Each row of battery cells 20 includes multiple battery cells 20 arranged along the second direction Y, and the third direction Z is perpendicular to the first direction X and the second direction Y.

The third direction Z is perpendicular to both the first direction X and the second direction Y. In other words, the third direction Z is perpendicular to the second surface 22 of the battery cell 20, meaning that the third direction Z is the thickness direction of the battery cell 20.

Exemplarily, the battery 100 includes two rows of battery cells 20 arranged along the third direction Z. Of course, in other embodiments, the battery 100 includes three rows, four rows, five rows, or six rows of battery cells 20 arranged along the third direction Z.

The multiple battery cells 20 within the battery 100 are arranged in multiple rows along the third direction Z, and each row of battery cells 20 includes multiple battery cells 20 arranged along the second direction Y. Thus, it is possible to realize one exhaust component 12 adapted to more battery cells 20, which is conducive to reducing the manufacturing cost of the battery 100 and saving the internal space of the battery 100.

According to some embodiments of the present disclosure, the embodiments of the present disclosure provide an electric device, wherein the electric device comprises a battery 100 of any of the above solutions, and the battery 100 is configured to provide electrical energy to the electric device.

The electric device can be any of the above-mentioned devices or systems that apply the battery 100.

According to some embodiments of the present disclosure, with reference to FIGS. 2 to 4, FIG. 8, and FIGS. 9 to 12, the present disclosure provides an exhaust component 12, wherein the exhaust component 12 comprises a main body part 121 and a one-way guiding part 122. The main body part 121 is therein provided with an exhaust chamber 1211, and along the first direction X, both sides of the main body part 121 are provided with first surfaces 1212, wherein the first surfaces 1212 are provided with multiple ventilation holes 1213 communicating with the exhaust chamber 1211. The ventilation holes 1213 are configured to be arranged oppositely to the pressure relief mechanism 21 along the first direction X. The cavity wall surface of the exhaust chamber 1211 is provided with a receiving groove 1214, wherein the receiving groove 1214 communicates with the ventilation holes 1213 and the exhaust chamber 1211. The one-way guiding parts 122 are provided in one-to-one correspondence with the ventilation holes 1213, the one-way guiding part 122 is connected to the main body part 121 and at least a portion of the one-way guiding part 122 is accommodated in the receiving groove 1214. The one-way guiding part 122 covers the ventilation holes 1213 and the one-way guiding part 122 is configured to detach from the main body part 121 under the impact of emissions released by the pressure relief mechanism 21 so as to open the ventilation holes 1213. The main body part 121 is provided therein with a medium channel 1215. The medium channel 1215 and the exhaust chamber 1211 are not in communication with each other, and the medium channel 1215 is configured to accommodate a refrigerant to manage the temperature of the battery cell 20.

It should be noted that, without conflict, the embodiments and features described in the embodiments of the present disclosure can be combined with each other.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

## Claims

1. An exhaust component, comprising
a main body part, wherein an exhaust chamber is provided therein; and the main body part is provided with a first surface, wherein the first surface is provided with ventilation holes communicating with the exhaust chamber; and
a one-way guiding part, arranged on the main body part, wherein the one-way guiding part is configured to allow emissions released by a pressure relief mechanism of a battery cell to enter the exhaust chamber through the ventilation holes, and is further configured to prevent the emissions within the exhaust chamber from being discharged through the ventilation holes.

2. The exhaust component according to claim 1, wherein along a first direction, one side of the main body part forms a first surface, and the ventilation holes are configured to be arranged oppositely to the pressure relief mechanism along the first direction; and
the first surface is provided with the multiple ventilation holes, and the one-way guiding part seals the ventilation holes; one-way guiding parts correspond one-to-one with the ventilation holes; and the one-way guiding part is configured to be triggered by the emissions released by the pressure relief mechanism arranged oppositely so as to open the ventilation holes.

3. The exhaust component according to claim 2, wherein the one-way guiding part covers the ventilation holes and the one-way guiding part is configured to detach from the main body part under an impact of the emissions released by the pressure relief mechanism so as to open the ventilation holes.

4. The exhaust component according to claim 3, wherein the one-way guiding part is a plate-like structure that covers the ventilation holes.

5. The exhaust component according to claim 3 or 4, wherein the ventilation holes penetrate a cavity wall surface of the exhaust chamber, and the one-way guiding part is connected to the cavity wall surface of the exhaust chamber.

6. The exhaust component according to claim 5, wherein the cavity wall surface of the exhaust chamber is provided with a receiving groove, wherein the receiving groove communicates with the ventilation holes and the exhaust chamber; and at least a portion of the one-way guiding part is accommodated within the receiving groove.

7. The exhaust component according to claim 2, wherein the one-way guiding part is a one-way valve arranged within the ventilation holes.

8. The exhaust component according to any one of claims 2 to 7, wherein along the first direction, the main body part is provided with two first surfaces opposite each other, and both first surfaces are provided with the ventilation holes.

9. The exhaust component according to any one of claims 1 to 8, wherein the first surface is a surface having a largest area among outer surfaces of the main body part.

10. The exhaust component according to any one of claims 1 to 9, wherein the main body part is further provided therein with a medium channel, wherein the medium channel and the exhaust chamber are not in communication with each other, and the medium channel is configured to accommodate a refrigerant to manage a temperature of the battery cell.

11. A box, comprising
a box body; and
the exhaust component according to any one of claims 1 to 10, wherein the exhaust component is provided inside the box body; and the exhaust component is configured to partition an interior of the box body into multiple containment cavities, wherein the containment cavities are configured for accommodating battery cells.

12. A battery, comprising
the box according to claim 11; and
a battery cell, wherein the battery cell is housed in a containment cavity; and the battery cell is provided with a pressure relief mechanism, wherein the pressure relief mechanism is configured to release an internal pressure of the battery cell.

13. The battery according to claim 12, wherein along the first direction, one side of the main body part forms the first surface; the pressure relief mechanism is arranged on one side of the battery cell along the first direction; and the pressure relief mechanism is arranged oppositely to the ventilation holes.

14. The battery according to claim 13, wherein the battery comprises multiple battery cells arranged along a second direction; the main body part extends along the second direction; the ventilation holes correspond one-to-one with pressure relief mechanisms; and the second direction is perpendicular to the first direction.

15. The battery according to claim 14, wherein the battery cell is rectangular in structure, and the battery cell is provided with a second surface, wherein the second surface is a surface having a largest area among outer surfaces of the battery cell, and the second surface is parallel to both the first direction and the second direction.

16. The battery according to claim 15, wherein the battery comprises multiple rows of battery cells arranged along a third direction; each row of battery cells comprises multiple battery cells arranged along the second direction; and the third direction is perpendicular to the first direction and the second direction.

17. An electric device, comprising the battery according to any one of claims 12 to 16, wherein the battery is configured to provide electrical energy.
